# EUROPEAN PATENT SPECIFICATION

(11) **EP 0 920 184 B1**
(45) Date of publication and mention of the grant of the patent: **23.01.2008**
(21) Application number: 98122004.9
(22) Date of filing: 19.11.1998
(51) Int. Cl.: H04N 1/21

(54) **Electronic camera system**
Elektronisches Kamerasystem
Système électronique de caméra

(30) Priority: 20.11.1997 JP 33485397
(43) Date of publication of application: 02.06.1999
(73) Proprietor: CASIO COMPUTER CO., LTD., Shibuya-ku, Tokyo (JP)
(72) Inventor: Ogura, Kazuo c/o Patent Department,Development Division, Hamura-shi, Tokyo 205-8555 (JP); Homma, Atsushi, c/o Patent Department,Development Division, Hamura-shi, Tokyo 205-8555 (JP)
(74) Representative: Grünecker, Kinkeldey, Stockmair & Schwanhäusser Anwaltssozietät

(56) References cited:
- EP-A- 0 860 980
- GB-A- 2 269 292
- US-A- 4 574 319
- US-A- 4 655 577
- US-A- 5 666 215

## Description

The present invention relates to an electronic camera system.

This application is based on Japanese Patent Application No. JP-A-9-334853, filed November 20, 1997.

In recent years, a digital camera has been developed and come into the market.

A subject image picked up by the digital camera is recorded as image data in a recording medium via photoelectric conversion by a CCD, etc., signal conversion, signal processing and the like. Image data recorded in the recording medium is read out, and then, it is possible to reproduce and display the image data on a display device such as a liquid crystal display or the like.

It is possible to output or transmit the image data recorded in the recording medium to an external equipment such as a printer, a personal computer or the like.

Following three methods are employed in order to print an image which is picked up by the digital camera, and is recorded in the recording medium. More specifically,
(1) in the case where a digital camera records image data in an internal recording medium (fixed type) such as a flash memory or the like, there is a method of transmitting the image data to a personal computer so as to be recorded in a recording medium on the personal computer side, reproducing the recorded image by the personal computer so that a plurality of thumbnail images (reduced image) are displayed on a monitor, and selecting a desired image from the plurality of images and printing it with the use of a printer;
(2) in the case where a digital camera records image data in a removable recording medium such as a memory card or the like, there is a method of connecting a recording medium reader to a personal computer, capturing the image data from the removable recording medium in the personal computer, reproducing the recorded image and displaying it on a monitor, and printing a desired image with the use of a printer; and
(3) there is a method of selecting an image by a digital camera, directly outputting or transmitting the selected image to an external printer, and thus, printing the selected image.

Among these methods, the above methods (1) and (2) needs to take some steps to record the image in the recording medium on the personal computer side and reproduce it, and select a desired image after displaying the image on the monitor. Therefore, a camera user must take troublesome procedures for printing the image, and in addition, must prepare a personal computer for image printing.

On the contrary, the above method (3) outputs an image directly to a printer, so that printing can be carried out without preparing a personal computer. However, in the case of printing a desired image, there is a need of reproducing an image recorded on a recording medium such as a flash memory or a memory card, and repeating an operation for displaying the image on a camera or a liquid crystal display of the printer until the desired image is shown, and thereafter, carrying out the printing operation. Therefore, it is impossible to previously know where the desired image is recorded in the recording medium; therefore, a user must perform the above operation every printing. Further, there may arise a problem that the user must see all of the recorded images or the last image thereof.

In any cases, printing conditions such as printing mode or the number of printing sheets need to be set at the time of printing. Therefore, the printing procedure is troublesome. Further, in the case of making a request to print to other persons, the user must give printing conditions or the like to other persons in detail.

EP-A- 0 860 980 describes a digital camera enabling a further specification of utilization parameters. It is for this purpose that the user can review the captured image data. During this reviewing process, the user can specify particular services, for instance, printing, sending the image data per email or recording the images in an album. The particular services and options are determined by a plurality of text-based menus. The parameters specified by the user are recorded in an additional utilization file.

It is the object of the present invention to provide a simplified and user friendly specification of parameters for printing image data captured by a digital camera.

This is achieved by the features of the independent claims.

The invention can be more fully under stood from the following detailed description when taken in conjunction with the accompanying drawings, in which:
FIG. 1A is a block diagram showing a circuit configuration of a digital camera of an electronic camera system according to a first embodiment of the present invention;
FIG. 1B is a detailed block diagram of a control section shown in FIG. 1A;
FIG. 2 is a perspective view (rear view) showing the digital camera shown in FIG. 1A according to the first embodiment;
FIG. 3 is a view showing an appearance of a printer including a memory card reader;
FIG. 4 is a view to explain printing conditions shown in a print condition registration list;
FIG. 5A is a block diagram showing a printing image output section;
FIG. 5B is a detailed block diagram showing printing condition setting section of FIG. 5A;
FIGS. 6A, 6B, and 6C are views to explain an example of printing condition setting operations;
FIGS. 7A and 7B are views showing examples of an image group selection menu;
FIG. 8 is a block diagram showing a configuration of a color processor circuit of a signal processing section;
FIGS. 9A, 9B, 9C, 9D, and 9E are views to explain an automatic setting operation for printing conditions in a group image;
FIG. 10 is a flowchart showing an example of an automatic setting operation for setting printing conditions at the time of pickup;
FIG. 11 is a flowchart showing an example of an automatic setting operation for setting printing conditions at the time of reproduction; and
FIG. 12 is a flowchart showing an example of an automatic setting operation for setting printing conditions at the time of pickup.

A preferred embodiment of an electronic camera system according to the present invention will now be described with reference to the accompanying drawings.

### [Circuit configuration]

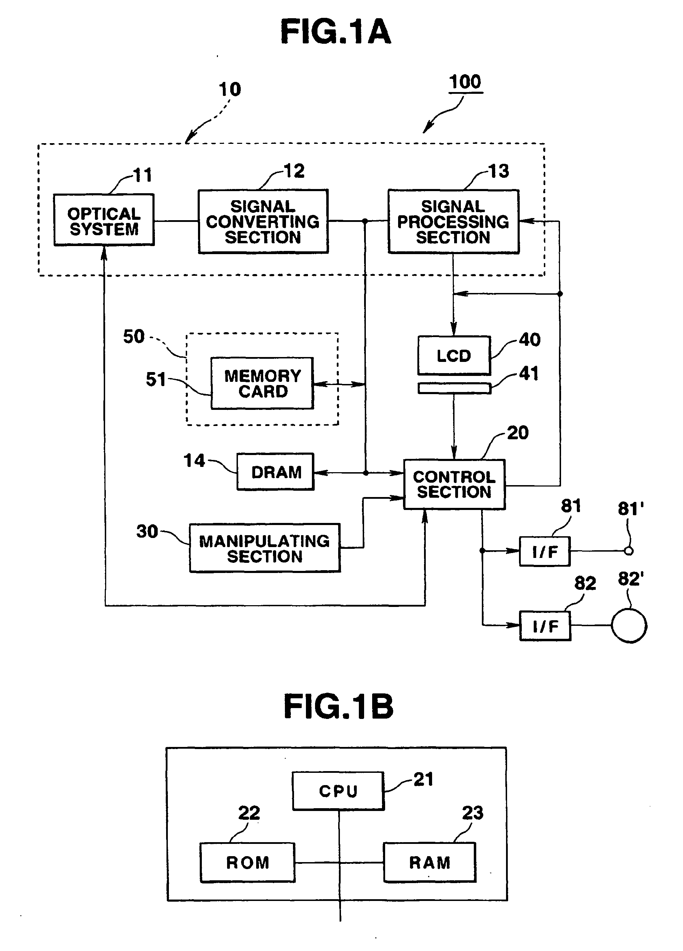

FIG. 1A shows a circuit configuration of a digital camera as an electronic camera system according to a first embodiment of the present invention. A digital camera 100 includes an optical system 11, a signal converting section 12, a signal processing section 13, a DRAM (Dynamic Random Access Memory) 14, a control section 20, a manipulation section 30, a touch-panel 41, a recording section 50 and interfaces 81 and 82.

In the optical system 11, a subject image is focused on a CCD (not shown) located on the after-stage by a pickup lens (objective lens).

The signal converting section 12 converts an image formed on the CCD via the front-stage optical system 11 into an electric signal, and then, converts the electric signal into a digital data (hereinafter, referred to as image data), and thus, outputs the image data corresponding to one frame at a predetermined cycle.

The signal processing section 13 includes a color process circuit and a DMA (direct memory access) controller, and carries out a color process with respect to an output from the signal converting section 12 so as to produce a digital luminance and color difference multiplex signal (YUV data), and thus, transmits and expands the YUV data into a designated area of the DRAM 14 under DMA. The signal processing section 13 reads out the YUV data stored in the DRAM 14 in recording, and then, subjects the YUV data to a JPEG compression process. The image data recorded in a recording medium (memory card) 51 captured via the recording section 50 is subjected to an expansion process so as to reproduce the YUV data.

The control section 20 includes a CPU 21, a ROM 22, a RAM and a timer (not shown), as shown in FIG. 1B. The CPU 21 is connected to the aforementioned various sections and a power changing switch (not shown) via a bus line, and controls the whole of digital camera 100 according to control programs stored in the ROM 22. Further, the CPU 21 performs an execution control of each function of the digital camera in accordance with state signals from the manipulation section 30 and the touch-panel 41. For example, the CPU 21 performs execution control for realizing each function of the digital camera by executing various processing programs stored in the ROM 22.

The ROM 22 is a storing medium for storing the aforementioned processing programs and fixed values for executing other functions of the digital camera 100. A PROM, a FROM (Flash ROM) and the like are used as the ROM 22.

The RAM 23 is used for temporarily storing data or processed results and used as intermediate working area.

The manipulation section 30 comprises a processing mode changing switch 101, function selection buttons 31 to 35, a main switch 102, a printing image designation button 36, a shutter button 37, an image data output button 38 and a record/reproduction mode changing switch 103, which will be described later. When these switches and buttons are operated, state signals are transmitted to the CPU 21.

The display section 40 comprises a display unit such as a liquid crystal display (LCD), and displays a subject image thereon at the time of image pickup, so that a display screen can be used as a view finder. Further, the display section can display a reproduced image at the time of image reproduction. A position detection sensor (touch panel) 41 is provided on a liquid crystal display device constituting the display screen of the display section 40. The position detection sensor 41 comprises a transparent touch electrode which is turned on when touching it with a pen or finger. When the user touches a portion on the display screen, the touched portion is turned on, and thereby, the CPU 21 can obtain a coordinate value of the portion, and thus, the control is transferred to processing means for executing a process corresponding to the coordinate value.

The recording section 50 receives a recording medium 51, and records image data from the signal processing section 13 on the recording medium 51 according to the control of CPU 21. In this embodiment, the recording section 50 is constructed in such a manner that the memory card 51 used as the recording medium is removable, and data write/read is performed. The data write/read may be performed by an internal fixed-type recording medium such as a flash memory or the like.

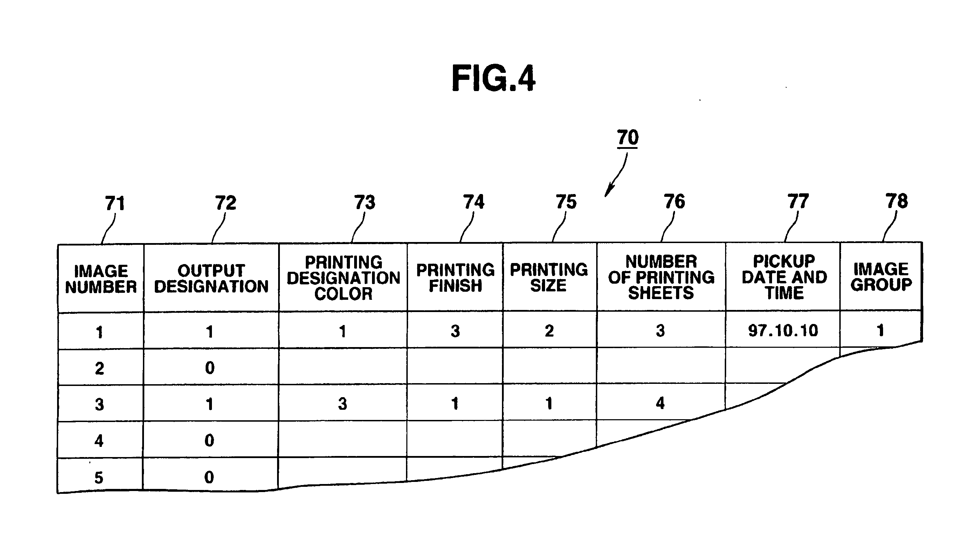

As described later, the memory card 51 is provided with a printing condition registration list area for registering various image printing conditions. In this embodiment, a printing condition registration list 70 (see FIG. 4) which will be described later is provided.

The memory card 51 is constructed so as to be removable; therefore, the memory card 51 is changeable. The memory card 51 can be mounted onto a personal computer and a printer including a memory card reader. Thus, the personal computer and printer including the memory card reader can process or print the images recorded on the memory card 51.

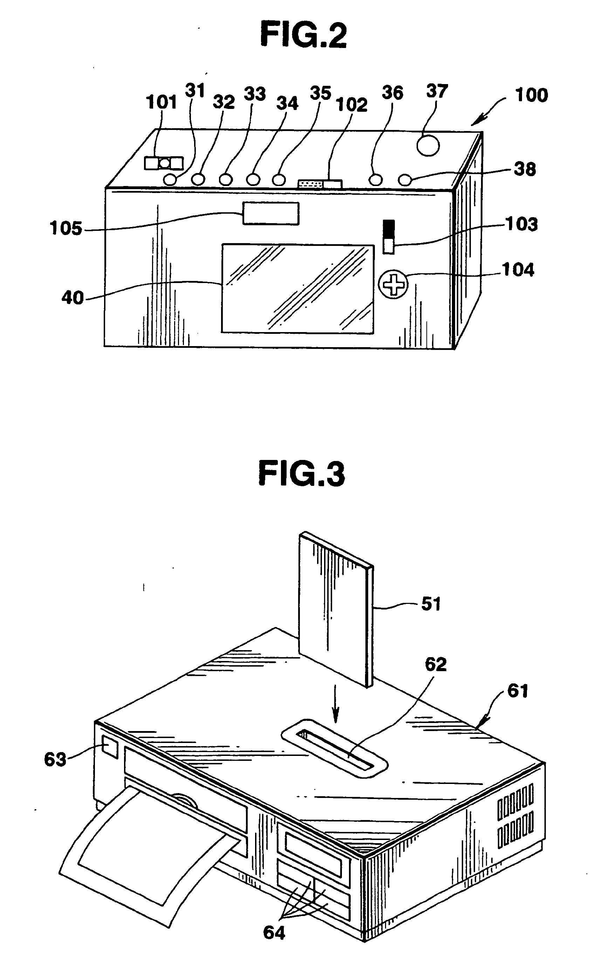

FIG. 3 is a view showing an appearance of a printer including a memory card reader. As shown in FIG. 3, a video printer 61 is provided with a slot 62 for mounting the memory card 51, a power switch 63 and various operation switches 64.

Further, the video printer 61 is a sublimation type thermal transfer printer which performs an output of 8-bits 256 gradation (167 ten-thousands of colors) with respect to each of three primary colors, that is, R, G and B. More specifically, the memory card 51 is mounted onto the slot 62 of the video printer 61, and thereafter, when the power switch 63 is turned on so that various switches 64 are operated, the print image selector (which comprises programs in this embodiment) provided in the video printer 61 makes reference to printing conditions of the printing condition registration list 70 stored in the memory card 51, and then, captures an image corresponding to the condition (operation results of various switches 64) instructed by the user. In this manner, the selected image is printed on a dedicated paper.

The interface 81 outputs the image data (YUV data) to an external printer via an output terminal 81' and a cable (not shown). Further, the interface 82 transmits the image data to an external printer including an infrared transmitter-receiver via an infrared transmitter-receiver 82'.

The image data outputted from the interfaces 81 and 82 may be only image data whose "printing designation" in a registration column 72 of the printing condition registration list 70 is set to data "1." By doing so, a transmission time is shortened, and it is effective in memory capacity on the external printer.

### [Appearance of system]

FIG. 2 is a perspective view showing one example of the digital camera of FIG. 1 when viewing the digital camera from the rear thereof.

The digital camera 100 is provided with a processing mode changing switch (slide switch) 101 for changing a processing mode, function section buttons 31 to 35, a main switch 102 for starting up the digital camera 100, a printing image designation button 36, a shutter button 37 and an output button 38 on its upper surface.

The back side of the digital camera 100 is provided with a record/reproduction mode changing switch 103 for making a change-over of a record mode and a reproduction mode, an optical finder 105 and a liquid crystal display 40 which functions as an image display unit.

The front side (not shown) of the digital camera 100 is provided with a pickup lens and a finder.

### [Processing mode]

The processing mode of the digital camera 100 is largely classified into a normal mode comprising recording and reproducing modes, and a special mode such as close-up pickup. A change-over of the normal mode and the special mode is made by changing the processing mode changing switch 101, and a change-over of the record mode and the reproducing mode is made by operating the record/reproduction mode changing switch 103. The branch to each mode by the change of these switches is performed by a mode discriminating means (comprising programs in this embodiment) which investigates state signals transmitted to the CPU 21 from the manipulation section 30 and branches to the corresponding mode processing circuit or program.

### [Record mode]

The record mode includes a pickup mode and a record/reproduction mode. The pickup mode is a mode of displaying image data captured periodically from the CCD on the liquid crystal display 40 as a through image. On the other hand, the record/reproduction mode is a mode of recording image data displayed at the time when the user pushes down the shutter button 37 at a desired timing while visibly confirming the through image, from a non-volatile memory such as DRAM 14 to the memory card 51.

In the normal mode, when the user slides the record/reproduction changing switch 103 to a record side, the processing mode is changed to the record mode, that is, pickup mode. Then, during the pickup mode, when the shutter button 37 is pushed, the pickup mode is changed to the record/reproduction mode. Further, in the pickup mode, when the printing image designation button 36 is pushed, it is possible to set image printing conditions.

### [Record/reproduction mode]

In the pickup mode, when the shutter button 37 is pushed, the mode is transferred to the record/ reproduction mode, and an image displayed on the liquid crystal display 40 at that time becomes a still image (picture). Then, the content of image buffer of the DRAM 14 is subjected to a JPEG compression process, and then, is recorded in the memory card 51. In this case, if printing conditions are set together with the image data, designated image data printing conditions are related onto the memory card 51, and is recorded in the printing condition registration list 70.

### [Reproduction mode]

In order to select the image, the reproduction mode includes a page feed mode and an output mode. The page feed mode is a mode of reading and reproducing the image data recorded on the memory card 51, and display it on the liquid crystal display 40. On the other hand, the output made is a mode of outputting or transmitting a reproduced image data (image data and a scale data or synthetic image data) to an external equipment such as a personal computer, a printer or the like.

In the page feed mode, when the printing image designation button 36 is pushed, it is possible to set printing conditions of the designated image, and then, the printing conditions of designated image data are recorded on the printing condition registration list 70 on the memory card 51.

In the output mode, when the user designates printing conditions, it is possible to make a check of the printing condition registration list 70 and to output a designated group image to the external equipment.

### [Printing condition registration list]

FIG. 4 is a view to explain printing conditions shown in the print condition registration list 70. The print condition registration list 70 is set in the memory card 51, and in the record/reproduction mode or the page feed mode, when the image designation button 36 is pushed, designated printing conditions are written into the printing condition registration list 70.

In FIG. 4, a serial number of the designated image is written in a registration column 71, and a flag (e.g., designated → "1," no designation → "0") indicating whether or not a printing output designation of the image by the user is made is written in a registration column 72. In a registration column 73, printing colors such as color, monochrome, black and white, when printing the image are coded, and the coded data (e.g., colour → "1," monochrome → "2," black and white → "3") are written thereon. In a registration column 74, data indicative of print finish such as glossy, matting, normal is coded and written thereon, and in a registration column 75, a printing size of image to be outputted is coded and written thereon. In a registration column 76, the number of printing sheets is written thereon, and in a registration column 77, there are written a pick-up date generated by a well-know calendar generation means (not shown) at the time of pick-up (when pushing the shutter button 37), and a pickup time generated based on a timer. In a registration column 78, there is written a group code set at the time of pickup, for example, a group code indicating which the image belongs to an image group such as travel, sports, memorial day, ... etc.

Further, a plurality of registration columns may be provided so that the number of printing sheets can be designated for each size. In this embodiment, the registration column 72 has been provided so that the flag indicating whether or not a printing output designation of the image by the user is made can be written therein. Only printing output designation image may be recorded on the printing condition registration list without providing the registration column 72.

### [Printing image output]

The control section 20 previously sets printing conditions based on the user's designation or automatically sets the printing conditions with respect to a desired image according to a printing image output section 110, and then, outputs image data together with printing conditions recorded in the printing condition registration list 70 when outputting image data.

The printing image output section 110 may be composed of a hardware circuit; however, in this embodiment, the printing image output section 110 comprises programs. Also, in modules of the printing image output section 110, a certain module may be composed of a hardware circuit; other modules may be composed of programs.

In the case where the printing image output section 110 comprises programs, each module of the printing image output section 110 is recorded on the ROM 22, and is executed and controlled by the CPU 21 according to control programs, and thus, image output process is realized in this embodiment.

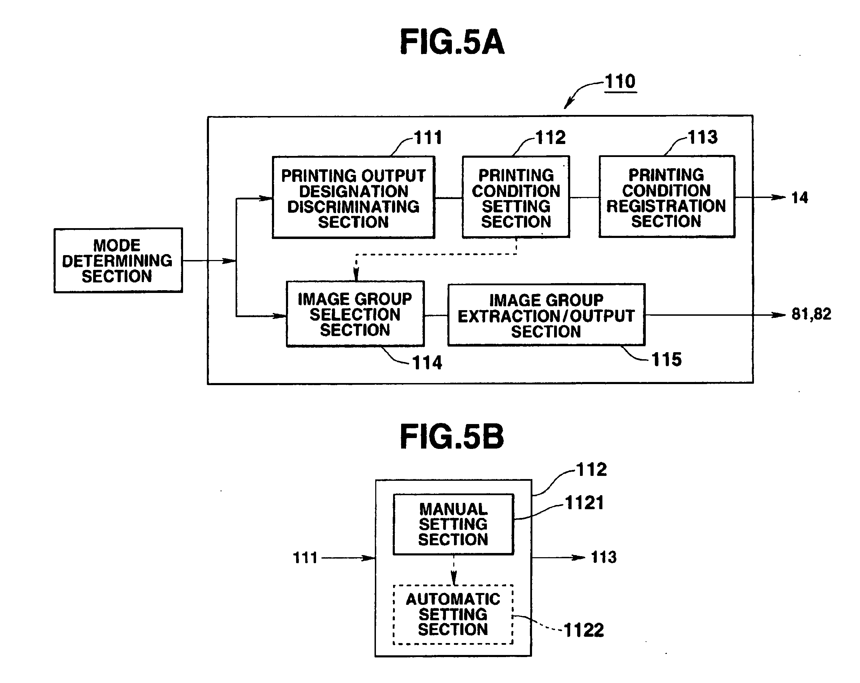

FIG. 5A is a block diagram showing a configuration of the printing image output section 110. The printing image output section 110 basically comprises printing output designation discriminating section 111, printing condition setting section 112, and printing condition registration means 113. In this embodiment, further, image group section 114 and image group extraction/output section 115 are added to the printing image output section 110.

The printing output designation discriminating section 111 discriminates pickup data (still image data) after pickup or discriminates whether or not the printing image designation button 36 is pushed. In the case where the printing image designation button 36 is pushed, it is discriminated at the time of point that printing output designation is made with respect to a picked up image or reproduced image displayed on the liquid crystal display 40. The printing condition designation flag set in the DRAM 14 or RAM 23 is turned on (set to "1"), and then, the sequence is transferred to the printing condition setting section 112. In this case, a mark such as asterisk may be indicated to the image in which printing output designation is made.

The printing condition setting section 112 successively displays a printing condition menu in a state of overlapping with the image displayed on the liquid crystal display 40, and thereafter, the user selects a desired printing condition menu. The set printing conditions are coded and temporarily stored in each printing condition area set in the DRAM 14 or RAM 23 together with the aforementioned printing condition designation flag.

Also, it is possible to automatically discriminate the number of printing sheets on the basis of the number of persons existing in the image. As shown in FIG. 5B, the printing condition setting section 112 may be composed of a printing condition manual setting section 1121 for selecting printing conditions by the user, and an automatic printing condition setting section 1122 (described later) for automatically setting the number of printing sheets on the basis of the number of persons existing in the image or setting pick-up date and time. The pick-up date and time are printed automatically (or according to printing designation) in the case of printing the image, and besides, can be used as condition selection data in the case of designating a specified date and time relative to a search of pick-up images and images made in traveling and selectively printing these images.

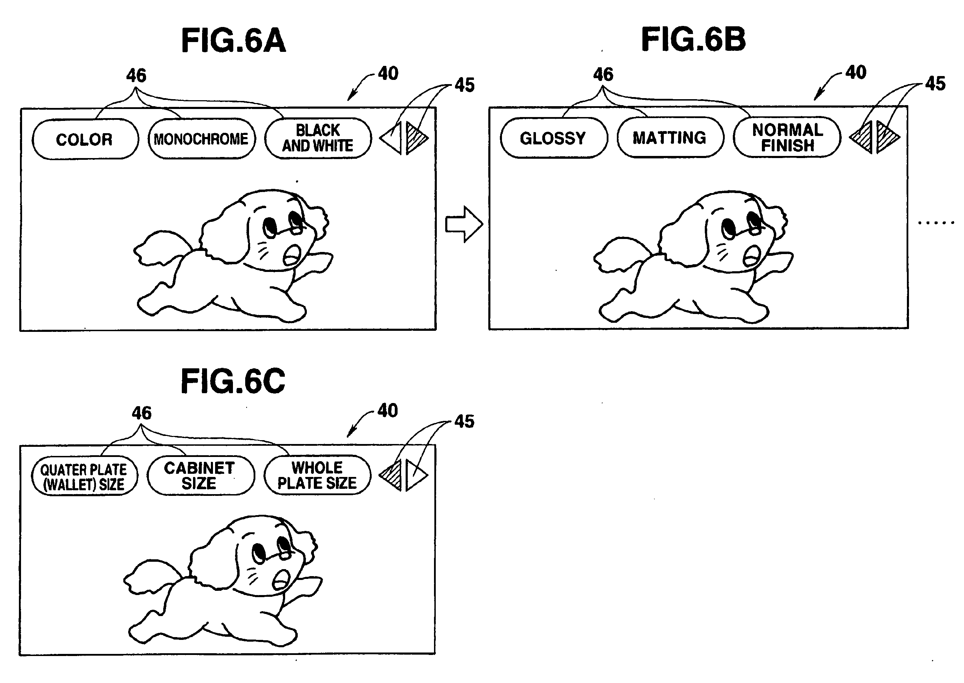

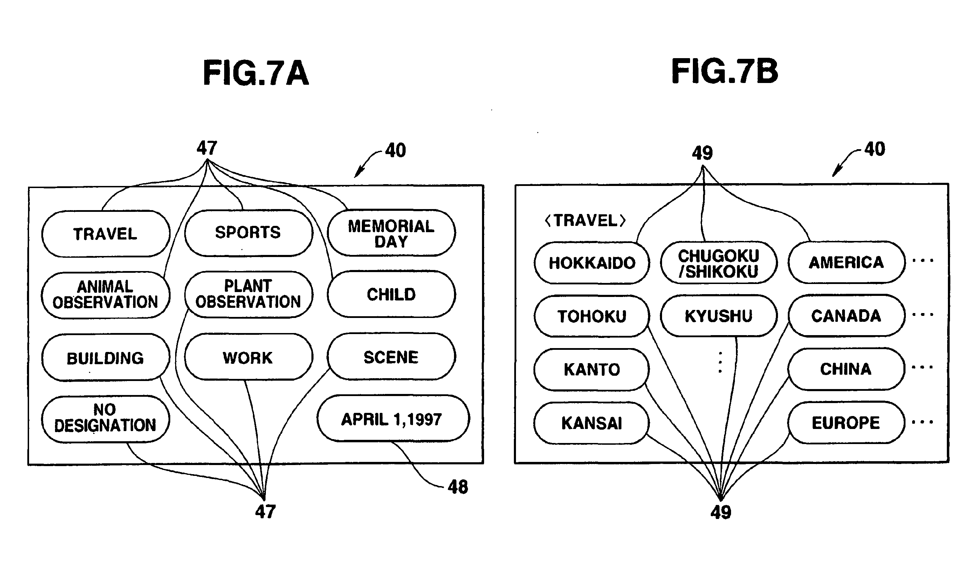

Each of FIGS. 6A to 6C is a view to explain a printing condition setting operation. FIG. 6A shows an example that a printing color designation icon 46 is displayed in a state of overlapping with the image. When the user touches any of the icon 46 displayed on the display section 40 including a touch panel 41 with a touch pen or his finger, the touched icon is distinguishably indicated (e.g., is flashing) as a selection candidate, and then, when the user again touches the icon, the touched icon is inputted as being selected. When the user touches other icons, the differential indication of the previously touched icon is turned off, and then, a new icon is distinguishably indicated as a selection candidate. In the case of setting other printing conditions, by touching an icon 45, the icon varies as shown in FIG. 6B and FIG. 6C. FIG. 6B shows an example that a printing finish menu is displayed, and FIG. 6C shows an example that a printing size setting menu is displayed. In the same manner as the case of FIG. 6A, it is possible to set a desired printing condition. Further, it is possible to display a menu for the number of printing sheets (in the case where no automatic printing condition setting section 1122 is provided) and the image group (see FIG. 7A and FIG. 7B), and to set printing conditions in the same manner as described above.

In the case of displaying the printing size shown in FIG. 6C, a plural size designation menu is provided. In the case where a plural size designation icon is selected, an icon for setting the number of printing sheets is displayed in confirming condition setting (after touching a flashing icon), and then, an icon for confirming a size designation completion is displayed after setting the number of printing sheets, and thus, the number of printing sheets may be set for each size.

The image group selection section 114 displays an image group selection menu for selecting an image group to be extracted in the output mode on the liquid crystal display so as to prompt selection to the user.

Each of FIG. 7A and FIG. 7B shows one example of the image group selection menu.

When the user touches a desired primary icon 47 with a touch pen or his finger, the touched icon is distinguishably indicated as a selection candidate, and then, a pick-up date and time of the latest image relative to the touched icon is displayed on a date-and-time indication/designation portion 48. When the user touches the date-and-time indication/designation portion 48, a pick-up date of the new image next to the latest image is indicated. Thus, when the user touches the date-and-time indication/designation portion 48, a pick-up date of image is displayed in the chronological order from current (new) to past (old). Whereby the user can designate a specified date and time relative to a search of pick-up images and images picked-up in traveling, and can selectively make the printing designation for these images.

Further, when the user again touches the icon which is distinguishably indicating as a selection candidate, the icon is selected, and then, a secondary selection menu of the icon (group) is displayed.

FIG. 7A shows an example of the primary selection menu, and FIG. 7B shows an example of the secondary selection menu. When the user twice touches a "travel" icon shown in FIG. 7A, a travel icon group 49 as shown in FIG. 7B is displayed. When the user selects the secondary icon 49 (e.g., Canada), the image group selection section 114 selects a code "Canada" as an extraction (sampling) key.

The image group extraction/output section 115 makes a comparison between the image group code (e.g., the registration column 78 in FIG. 4) of the printing condition registration list 70 and the selected extraction key, and then, sets the corresponding image number setting column 72 (see FIG. 4) to "1." Whereby it is possible to output the image and its printing condition data to the external equipment via the interface 81 or interface 82. When the data is outputted to the external equipment, data recorded in the setting columns 72 to 76 of the printing condition list 70 is cleared.

Further, when setting an output of the memory card 51 is set by the image group extraction/output section 115 and mounting the memory card 51 in a personal computer or a printer as shown in FIG. 3, including a memory card reader, it is possible to print out the aforementioned image.

In the case where "no designation" is selected in the primary selection menu, all of image data (and printing condition data) is outputted to the external equipment via the interface 81 or interface 82 without carrying out a secondary screen display and image group extraction.

Further, in the case where "no designation" is selected in the primary selection menu, only image having printing designation (image to which a mark such as asterisk is given, i.e., image of output designation flag of the setting column 72 being "1") may be outputted. In this case, the mark such as asterisk is outputted together, and then, may be printed together with the image.

### [Automatic count of the number of persons (Number of printing sheets)]

According to the present invention, it is possible to automatically recognize the number of persons existing in a group image, and to discriminate the number of persons who were picked-up.

The automatic printing condition setting section 1122 discriminates a person who turns his face toward the front on the basis of color component of pickup image, and counts the number of persons. In this case, the person who turns his face toward the front is set as a discriminating subject, and thereby, the number of persons is counted except animals or passers-by (most of them turn their face toward the side), and thus, the number of persons who were picked-up can be automatically counted.

As described before (FIG. 1A), the signal processing section 13 includes the color process circuit and the DMA controller, and carries out a color process with respect to an output from the signal converting section 12 so as to generate a digital luminance color difference multiplex signal (YUV data), and thus, transmits and expands the YUV data in a designated (specified) area of the DRAM 14 according to a DMA (Direct Memory Access). Therefore, a color component from the color process circuit is discriminated, and thereby, a discrimination relative to the persons is made.

### [Color process circuit]

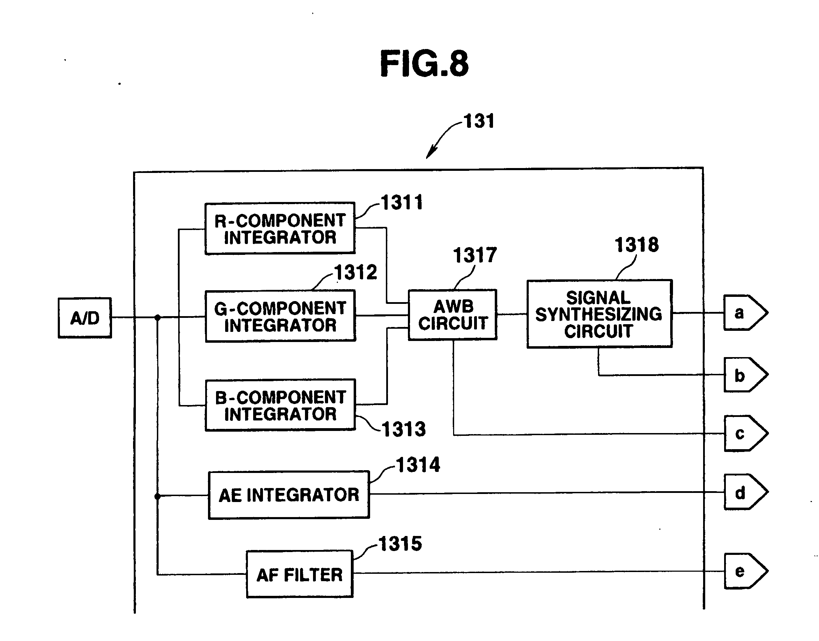

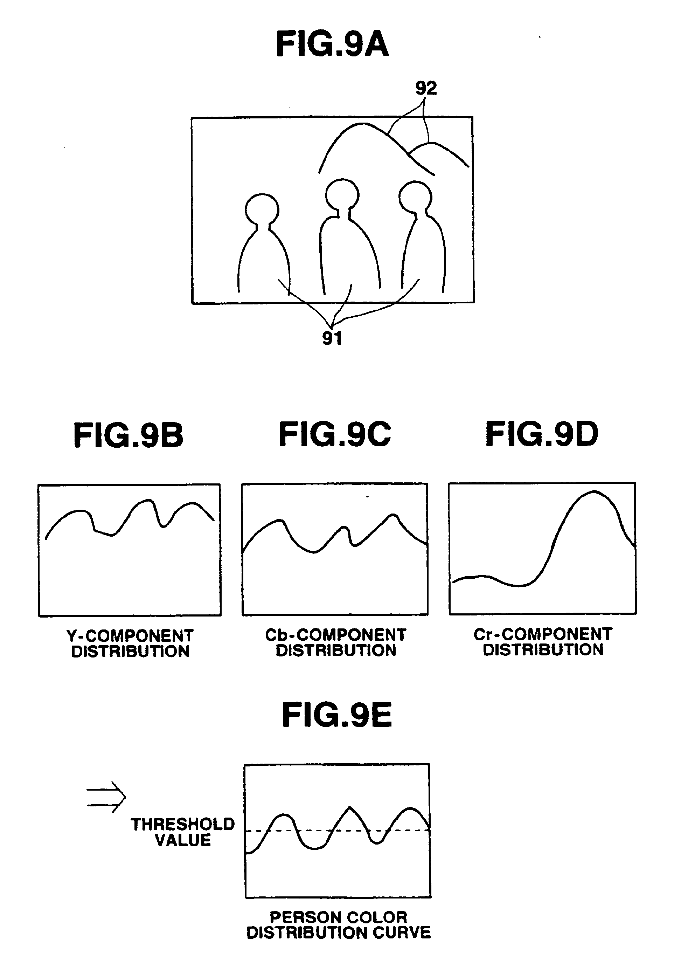

FIG. 8 is a block diagram showing a configuration of the color process circuit of the signal processing section 13, and each of FIGS. 9A to 9E is a view to explain an automatic printing condition setting operation of a group image.

As shown in FIG. 8, the color process circuit 131 comprises an R-component integrator 1311, a G-component integrator 1312, a B-component integrator 1313, an AE (Automatic Exposure (iris)) integrator 1314, an AF filter 1315, an AWB circuit 1317 and a signal synthetic circuit 1318.

An image signal obtained by photoelectrically converting the image by the CCD is converted into a digital signal by means of the A/D converter of the signal converting section 12, and then, is inputted to the color process circuit 131.

In the color process circuit 131, an input signal is subjected to a process for generating an automatic exposure (iris) (AE) signal, an auto white balance (AWB) signal, an auto focus (AF) signal, and Y, Cb and Cr signals, etc.

The AE integrator 1314 integrates the input signal, and then, outputs an integral value d. In order to detect a contrast auto focus high frequency component from the input signal, the AF filter 1315 passes the input signal through a high pass filter (HPF), and thereafter, outputs an integral value e. The AWB circuit 1317 outputs each integral value of components integrated by the R-component integrator 1311, the G-component integrator 1312 and the B-component integrator 1313. When these outputs are inputted to the control section 20, the control section 20 outputs a gain given to an AGC of the signal converting section 12, a shutter speed and a control signal for controlling the lens 101 on the basis of these signals.

A pattern of human skin color and cloth color component is previously registered in the automatic printing condition setting section 1122. In a pickup image composed of persons 91 and a background 92 as shown in FIG. 9A, a person color distribution curve (see FIG. 9E) is obtained on the basis of a difference in signal distribution between Y, Cb and Cr signals (see FIGS. 9B, 9C, and 9D), and then, a convex portion in the distribution curve in a predetermined threshold value is regarded as being a person image. Thus, by counting the convex portion in the distribution curve, it is possible to recognize the number of persons existing in the aforementioned pickup image.

### [Printing condition setting operation in pickup]

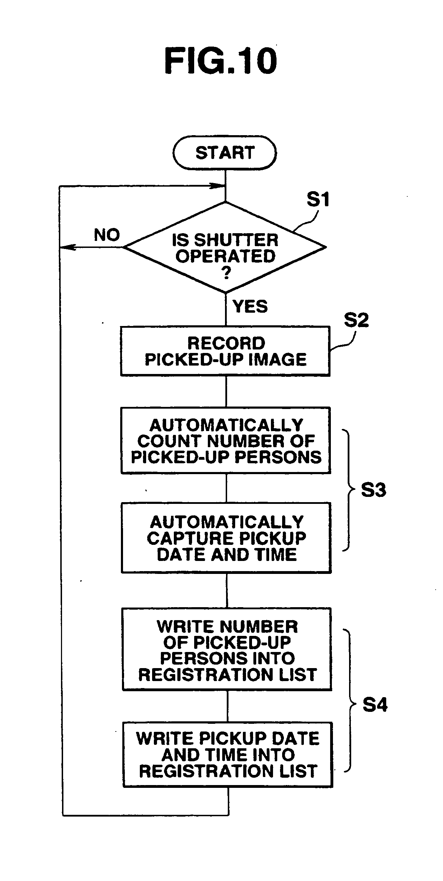

FIG. 10 is a flowchart showing an automatic setting operation of printing conditions at the time of pickup, in particular, the number of printing sheets.

In the record mode, when operating the shutter button 37, an image is picked up (step S1), and then, when the mode is transferred to the record/reproduction mode, the picked-up image is recorded in the memory card 51 (step S2). The number of picked-up persons is automatically counted, and then, an automatic capture process of pickup date and time is executed (step S3). The number of picked-up persons corresponding to the recorded image is written in the registration column (recording the number of printing sheets) 76 of the printing condition registration list 70, and then, the pickup date and time are written in the registration column (pickup date and time column) 77 (step S4).

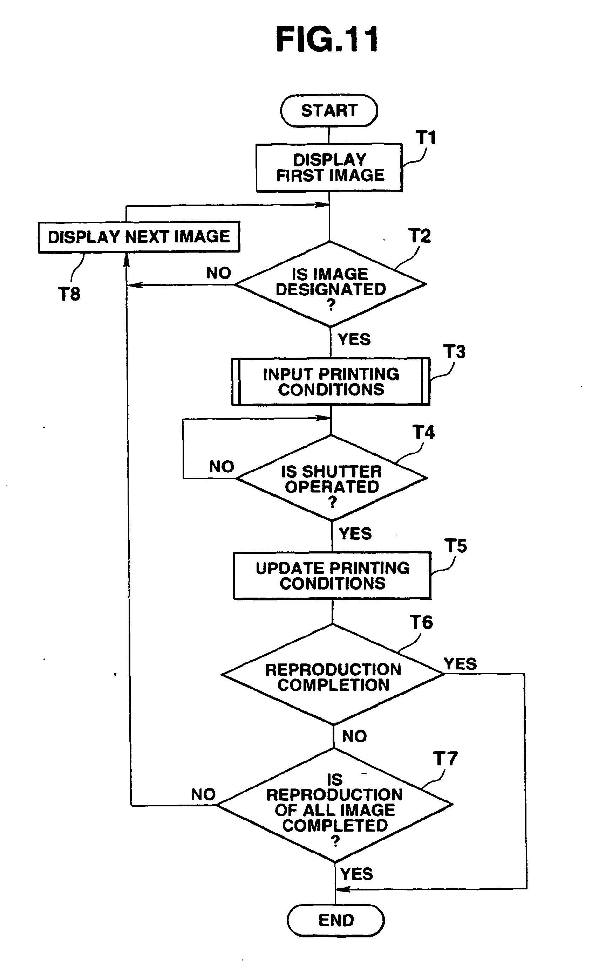

FIG. 11 is a flowchart showing a printing condition setting operation at the time of reproduction.

In the reproduction mode, when a first reproduced image is displayed (step T1), the image designation button 36 is pushed to designate a desired image (step T2), and then, the mode is transferred to the printing condition setting mode. At step T2, in the case where a key for feeding the image is pushed, the sequence proceeds to step T8, and the next image is displayed, and further, the sequence returns to the step T2.

At step T2, in the case where the printing image designation button 36 is pushed, the printing conditions are displayed in a state of overlapping with the reproduced image, and then, the user starts an operation for setting individual printing conditions (step T3).

After the printing condition setting is completed, when the shutter button is operated (step T4), the operation for setting printing conditions is completed with respect to one image, and then, printing conditions are updated with respect to a current image (step T5).

At this point of time, in the case where the user desires to finish the operation for setting printing conditions, the printing condition setting mode ends by operating a reproduction completion button (step T6). On the other hand, when pushing the shutter button, the next image is displayed (step T7).

In the case where the reproduction of all images is completed, the printing condition setting mode ends, and in the case where there is the next image, the sequence proceeds to step T8 to display the next image, and then, returns to the step T2.

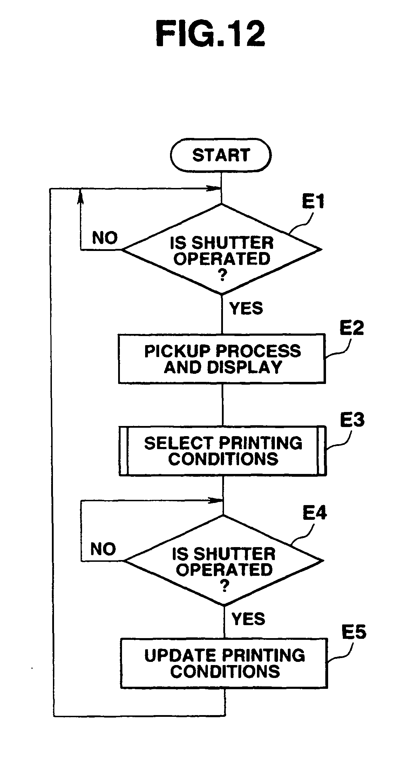

FIG. 12 is a flowchart showing an operation in the case where the user arbitrarily sets printing conditions at the time of image pickup.

In a pickup mode (including a pickup waiting state), when the shutter button is operated (step E1), an image pickup process is carried out, and then, the picked-up image is reproduced and displayed on the display section (step E2). Subsequently, the printing condition setting menu is displayed in a state of overlapping with the reproduced image, and then, an operation for setting printing conditions is carried out with respect to one image (step E3). After the printing conditions are set, when the shutter button is again operated (step E4), the setting data is updated, and then, the mode returns to the pickup waiting state.

In step T3 of FIG. 11 and in step E3 of FIG. 12, the operation for setting printing conditions with respect to one image is carried out on the aforementioned display screen shown in FIGS. 6A to 6C.

More specifically, when starting the operation for setting printing conditions, as shown in FIGS. 6A to 6C, the aforementioned menu for setting various printing conditions is displayed in a state of overlapping with the reproduced image. These printing conditions are successively selected with the use of the manipulation section 30 and the touch panel 41, and then, these setting data is changed.

## Claims

1. An electronic camera comprising:
an image pickup device (10);
a display (40) configured to display an image picked up by the image pickup device and a plurality of selectable icons (46) each representing one of a plurality of selectable items of respective printing conditions for the image;
an input device (104) configured to select at least one of the plurality of icons (46) of the respective printing conditions in response to a touch of a user on the display (40);
a memory (51) for storing said image picked up by said image pickup device and which is removable from the electronic camera; and
a memory controller (20) for writing at least one printing condition item corresponding to the at least one selected icon in the memory so as to correspond to said image picked up by said image pickup device.

2. The electronic camera according to claim 1, **characterized by** further comprising an output terminal (81' and 82') for outputting the image picked up by said image pickup device and the corresponding at least one printing condition item from said memory to an external printer.

3. The electronic camera according to one of claims 1, **characterized in that** the display sequentially displays the selectable icons for each of the respective printing conditions.

4. The electronic camera according to claim 1, **characterized in that** the controller controls the display device to simultaneously display the image picked up by the image pickup device and the plurality of icons when the icons are to be selected.

5. The electronic camera according to one of claims 1 to 4, **characterized in that** the plurality of icons includes an icon indicating a number of printing sheets.

6. The electronic camera according to one of claims 1 to 4, **characterized in that** the plurality of icons includes an icon indicating a printing size,

7. The electronic camera according to one of claims 1 to 4, **characterized in that** the plurality of icons includes an icon indicating a grouping of images to be simultaneously printed.

8. The electronic camera according to one of claims 1 to 7, **characterized in that** said display includes a touch panel (41) for selecting the icons with a finger touch.

9. A system comprising:
(i) an electronic camera according to one of claims 1 to 8; and
(ii) a printer including:
a connector to which said memory is removably connected; and
a printing section configured to print the image stored in said memory in accordance with the corresponding at least one printing condition item stored in said memory

10. An image picking up and recording method for an electronic camera, comprising the steps of:
picking up an image by an image pickup device (10) of said electronic camera;
displaying, on a display of said electronic camera, the picked up image and a plurality of selectable icons (46) each representing one of a plurality of selectable items of respective printing conditions for the image;
selecting at least one printing condition icon of the plurality of icons (46) of the respective printing conditions in response to a touch of a user on a displayed selectable icon (46);
storing the picked up image in a memory which is removable from said electronic camera; and
a memory controlling step for writing at least one printing condition item corresponding to the at least one selected icon in the memory so as to correspond to the picked up image.

11. The image picking up and recording method according to claim 10 further comprising an outputting step for outputting the picked up image and the corresponding stored at least one printing condition item to an external printer.

12. The image picking up and recording method according to claim 10, wherein said displaying step sequentially displays the selectable icons for each of the respective printing conditions.

13. The image picking up and recording method according to claim 10, wherein said controlling step controlling the displaying step to simultaneously display the picked up image and the plurality of icons when the icons are to be selected.

14. The image picking up and recording method according to one of claims 10 to 13, wherein the plurality of icons includes an icon indicating a number of printing sheets.

15. The image picking up and recording method according to one of claims 10 to 13 wherein the plurality of icons includes an icon indicating a printing size.

16. The image picking up and recording method according to one of claims 10 to 13, wherein the plurality of icons includes an icon indicating a grouping of images to be simultaneously printed.

17. The image picking up and recording method according to one of claims 10 to 16, wherein said selecting step obtaining a selection based on a finger touch on a touch panel (41) included in said display panel.

18. A method comprising:
(i) all steps of any of claims 10 to 17; and
(ii) a printing step including:
a connection step for removably connecting said memory to a printer; and
a printing step for printing the image stored in said memory in accordance with the corresponding at least one printing condition item stored in said memory.

## Patentansprüche

1. Elektronische Kamera, die umfasst:
eine Bildaufnahmevorrichtung (10);
eine Anzeige (40), die so konfiguriert ist, dass sie ein mit der Bildaufnahmevorrichtung aufgenommenes Bild und eine Vielzahl auswählbarer Icons (46) anzeigt, die jeweils eines einer Vielzahl auswählbarer Elemente entsprechender Druckbedingungen für das Bild darstellen;
eine Eingabevorrichtung (104), die zum Auswählen wenigstens eines der Vielzahl von Icons (46) der jeweiligen Druckbedingungen in Reaktion auf eine Berührung eines Benutzers an der Anzeige (40) konfiguriert ist;
einen Speicher (51) zum Speichern des durch die Bildaufnahmevorrichtung aufgenommenen Bildes, der aus der elektronischen Kamera entnommen werden kann; und
eine Speicher-Steuereinheit (20), die wenigstens ein Druckbedingungs-Element, das dem wenigstens einen ausgewählten Icon entspricht, so in den Speicher schreibt, dass es dem mit der Bildaufnahmevorrichtung aufgenommenen Bild entspricht.

2. Elektronische Kamera nach Anspruch 1, **dadurch gekennzeichnet, dass** sie des Weiteren eine Ausgabeeinrichtung (81' und 82') zum Ausgeben des mit der Bildaufnahmevorrichtung aufgenommenen Bildes und des entsprechenden wenigstens einen Druckbedingungs-Elementes aus dem Speicher an einen externen Drucker umfasst.

3. Elektronische Kamera nach Anspruch 1, **dadurch gekennzeichnet, dass** die Anzeige sequenziell die auswählbaren Icons für jede der jeweiligen Druckbedingungen anzeigt.

4. Elektronische Kamera nach Anspruch 1, **dadurch gekennzeichnet, dass** die Steuereinheit die Anzeigevorrichtung so steuert, dass sie gleichzeitig das mit der Bildaufnahmevorrichtung aufgenommene Bild und die Vielzahl von Icons anzeigt, wenn die Icons ausgewählt werden sollen.

5. Elektronische Kamera nach einem der Ansprüche 1 bis 4, **dadurch gekennzeichnet, dass** die Vielzahl von Icons ein Icon enthält, das eine Anzahl von Druckblättern anzeigt.

6. Elektronische Kamera nach einem der Ansprüche 1 bis 4, **dadurch gekennzeichnet, dass** die Vielzahl von Icons ein Icon enthält, das eine Druckgröße zeigt.

7. Elektronische Kamera nach einem der Ansprüche 1 bis 4, **dadurch gekennzeichnet, dass** die Vielzahl von Icons ein Icon enthält, das eine Gruppierung von Bilder anzeigt, die gleichzeitig zu drucken sind.

8. Elektronische Kamera nach einem der Ansprüche 1 bis 7, **dadurch gekennzeichnet, dass** die Anzeige ein Berührungseingabefeld (41) zum Auswählen der Icons mit einer Fingerberührung enthält.

9. System, das umfasst:
(i) eine elektronische Kamera nach einem der Ansprüche 1 bis 8; und
(ii) einen Drucker, der enthält:
einen Anschluss, mit dem der Speicher lösbar verbunden ist; und
einen Druckabschnitt, der so konfiguriert ist, dass er das in dem Speicher gespeicherte Bild gemäß dem entsprechenden wenigstens einen Druckbedingungs-Element druckt, das in dem Speicher gespeichert ist.

10. Verfahren zum Aufnehmen und Aufzeichnen von Bildern für eine elektronische Kamera, das die folgenden Schritte umfasst:
Aufnehmen eines Bildes mit einer Bildaufnahmevorrichtung (10) der elektronischen Kamera;
Anzeigen des aufgenommenen Bildes und einer Vielzahl auswählbarer Icons (46), die jeweils eines einer Vielzahl auswählbarer Elemente jeweiliger Druckbedingungen für das Bild darstellen, auf einer Anzeige der elektronischen Kamera;
Auswählen wenigstens eines Druckbedingungs-Icons der Vielzahl von Icons (46) der jeweiligen Druckbedingungen in Reaktion auf eine Berührung eines angezeigten auswählbaren Icons (46) durch einen Benutzer;
Speichern des aufgenommenen Bildes in einem Speicher, der aus der elektronischen Kamera entnommen werden kann; und
einen Speichersteuerschritt, mit dem wenigstens ein Druckbedingungs-Element, das dem wenigstens ausgewählten Icon entspricht, so in den Speicher geschrieben wird, dass es dem aufgenommenen Bild entspricht.

11. Verfahren zum Aufnehmen und Aufzeichnen von Bildern nach Anspruch 10, das des Weiteren einen Ausgabeschritt zum Ausgeben des aufgenommenen Bildes und des entsprechenden gespeicherten wenigstens einen Druckbedingungs-Elementes an einen externen Drucker umfasst.

12. Verfahren zum Aufnehmen und Aufzeichnen von Bildern nach Anspruch 10, wobei der Anzeigeschritt die auswählbaren Icons für jede der jeweiligen Druckbedingungen sequenziell anzeigt.

13. Verfahren zum Aufnehmen und Aufzeichnen von Bildern nach Anspruch 10, wobei der Steuerschritt den Anzeigeschritt so steuert, dass er das aufgenommene Bild und die Vielzahl von Icons gleichzeitig anzeigt, wenn die Icons ausgewählt werden sollen.

14. Verfahren zum Aufnehmen und Aufzeichnen von Bildern nach einem der Ansprüche 10 bis 13, wobei die Vielzahl von Icons ein Icon enthält, das eine Anzahl von Druckblättern anzeigt.

15. Verfahren zum Aufnehmen und Aufzeichnen von Bildern nach einem der Ansprüche 10 bis 13, wobei die Vielzahl von Icons ein Icon enthält, das eine Druckgröße anzeigt.

16. Verfahren zum Aufnehmen und Aufzeichnen von Bildern nach einem der Ansprüche 10 bis 13, wobei die Vielzahl von Icons ein Icon enthält, das eine Gruppierung von Bildern anzeigt, die gleichzeitig zu drucken sind.

17. Verfahren zum Aufnehmen und Aufzeichnen von Bildern nach einem der Ansprüche 10 bis 16, wobei der Auswählschritt eine Auswahl auf Basis einer Fingerberührung an ein Berührungseingabefeld (41) erhält, der in dem Anzeigefeld enthalten ist.

18. Verfahren, das umfasst:
(i) alle Schritte nach einem der Ansprüche 10 bis 17; und
(ii) einen Druckschritt, der einschließt:
einen Verbindungsschritt zum lösbaren Verbinden des Speichers mit einem Drucker; und
einen Druckschritt zum Drucken des in dem Speicher gespeicherten Bildes gemäß dem entsprechenden wenigstens einen Druckbedingungs-Element, das in dem Speicher gespeichert ist.

## Revendications

1. Caméra électronique comprenant :
un dispositif de capture d'image (10) ;
un écran (40) configuré pour afficher une image capturée par le dispositif de capture d'image et une pluralité d'icônes sélectionnables (46) représentant chacune l'un d'une pluralité d'items sélectionnables de conditions d'impression respectives pour l'image ;
un dispositif d'entrée (104) configuré pour sélectionner au moins une de la pluralité d'icônes (46) des conditions d'impression respectives en réponse à un toucher d'un utilisateur sur l'écran (40) ;
une mémoire (51) pour stocker ladite image capturée par ledit dispositif de capture d'image et qui est amovible par rapport à la caméra électronique ; et
un contrôleur de mémoire (20) pour écrire au moins un item de conditions d'impression correspondant à l'au moins une icône sélectionnée dans la mémoire de façon à correspondre à ladite image capturée par ledit dispositif de capture d'image.

2. Caméra électronique selon la revendication 1, **caractérisée par** le fait de comprendre en outre une borne de sortie (81' et 82') pour sortir l'image capturée par ledit dispositif de capture d'image et l'au moins un item de conditions d'impression correspondant depuis ladite mémoire vers une imprimante extérieure.

3. Caméra électronique selon la revendication 1, **caractérisée en ce que** l'écran affiche séquentiellement les icônes sélectionnables pour chacune des conditions d'impression respectives.

4. Caméra électronique selon la revendication 1, **caractérisée en ce que** le contrôleur commande le dispositif d'affichage pour afficher simultanément l'image capturée par le dispositif de capture d'image et la pluralité d'icônes lorsque les icônes doivent être sélectionnées.

5. Caméra électronique selon l'une des revendications 1 à 4, **caractérisée en ce que** la pluralité d'icônes comprend une icône indiquant un nombre de feuilles d'impression.

6. Caméra électronique selon l'une des revendications 1 à 4, **caractérisée en ce que** la pluralité d'icônes comprend une icône indiquant un format d'impression.

7. Caméra électronique selon l'une des revendications 1 à 4, **caractérisée en ce que** la pluralité d'icônes comprend une icône indiquant un groupement d'images devant être imprimées simultanément.

8. Caméra électronique selon l'une des revendications 1 à 7, **caractérisée en ce que** ledit écran comprend un écran tactile (41) pour sélectionner les icônes par un contact tactile.

9. Système comprenant :
(i) une caméra électronique selon l'une des revendications 1 à 8 ; et
(ii) une imprimante comprenant :
un connecteur auquel ladite mémoire est connectée de manière amovible ; et
une section d'impression configurée pour imprimer l'image stockée dans ladite mémoire selon l'au moins un item de conditions d'impression correspondant stocké dans ladite mémoire.

10. Procédé de capture et d'enregistrement d'image pour une caméra électronique comprenant les étapes consistant à :
capturer une image par un dispositif de capture d'image (10) de ladite caméra électronique ;
afficher, sur un écran de ladite caméra électronique, l'image capturée et une pluralité d'icônes sélectionnables (46) représentant chacune l'un d'une pluralité d'items sélectionnables de conditions d'impression respectives pour l'image ;
sélectionner au moins une icône de conditions d'impression de la pluralité d'icônes (46) des conditions d'impression respectives en réponse à un toucher d'un utilisateur sur une icône sélectionnable affichée (46) ;
stocker l'image capturée dans une mémoire qui est amovible par rapport à la caméra électronique ; et
une étape de commande de mémoire pour écrire au moins un item de conditions d'impression correspondant à l'au moins une icône sélectionnée dans la mémoire de façon à correspondre à l'image capturée.

11. Procédé de capture et d'enregistrement d'image selon la revendication 10, comprenant en outre une étape de sortie pour sortir l'image capturée et l'au moins un item de conditions d'impression correspondant enregistré sur une imprimante extérieure.

12. Procédé de capture et d'enregistrement d'image selon la revendication 10, dans lequel ladite étape d'affichage affiche séquentiellement les icônes sélectionnables pour chacune des conditions d'impression respectives.

13. Procédé de capture et d'enregistrement d'image selon la revendication 10, dans lequel l'étape de commande commande l'étape d'affichage pour afficher simultanément l'image capturée et la pluralité d'icônes lorsque les icônes doivent être sélectionnées.

14. Procédé de capture et d'enregistrement d'image selon l'une des revendications 10 à 13, dans lequel la pluralité d'icônes comprend une icône indiquant un nombre de feuilles d'impression.

15. Procédé de capture et d'enregistrement d'image selon l'une des revendications 10 à 13, dans lequel la pluralité d'icônes comprend une icône indiquant un format d'impression.

16. Procédé de capture et d'enregistrement d'image selon l'une des revendications 10 à 13, dans lequel la pluralité d'icônes comprend une icône indiquant un groupement d'images devant être imprimées simultanément.

17. Procédé de capture et d'enregistrement d'image selon l'une des revendications 10 à 16, dans lequel ladite étape de sélection obtient une sélection sur la base d'un contact tactile sur un écran tactile (41) compris dans ledit écran d'affichage.

18. Procédé comprenant :
(i) toutes les étapes de toutes les revendications 10 à 17 ; et
(ii) une étape d'impression comprenant :
une étape de connexion pour connecter de façon amovible ladite mémoire sur une imprimante ; et
une étape d'impression pour imprimer l'image stockée dans ladite mémoire selon l'au moins un item de conditions d'impression correspondant stocké dans ladite mémoire.
